# FASCICULE DE BREVET EUROPEEN

(11) **EP 1 670 004 B1**
(45) Date de publication et mention de la délivrance du brevet: **20.08.2008**
(21) Numéro de dépôt: 05301021.1
(22) Date de dépôt: 07.12.2005
(51) Int. Cl.: H01B 7/295, C09K 21/14, C08L 95/00

(54) **Cable d'energie et/ou de telecommunication resistant au feu**
Feuerfestes Energie- und/oder Telekommunikationskabel
Fire resistant power and/or telecommunication cable

(30) Priorité: 08.12.2004 FR 0452899
(43) Date de publication de la demande: 14.06.2006
(73) Titulaire: NEXANS France, 75008 Paris (FR)
(72) Inventeur: Pinto, Olivier, 69003 Lyon (FR)
(74) Mandataire: Feray, Valérie

(56) Documents cités:
- EP-A- 0 339 843
- US-A- 4 000 140
- US-A- 4 419 469
- US-A- 5 437 923
- DATABASE WPI Section Ch, Week 198546 Derwent Publications Ltd., London, GB; Class A85, AN 1985-287211 XP002337749 & JP 60 197762 A (HITACHI CABLE LTD) 7 octobre 1985 (1985-10-07)
- DATABASE WPI Section Ch, Week 198644 Derwent Publications Ltd., London, GB; Class A17, AN 1986-289300 XP002337750 & JP 61 213222 A (HUMAN IND CORP) 22 septembre 1986 (1986-09-22)

## Description

La présente invention concerne un câble capable de résister à des conditions thermiques extrêmes.

L'invention trouve une application particulièrement avantageuse, mais non exclusive, dans le domaine des câbles d'énergie ou de télécommunication qui sont destinés à rester opérationnels pendant un temps défini lorsqu'ils sont soumis à de fortes chaleurs et/ou directement à des flammes.

Aujourd'hui, un des enjeux majeurs de l'industrie du câble est l'amélioration du comportement et des performances des câbles dans des conditions thermiques extrêmes, notamment celles rencontrées lors d'un incendie. Pour des raisons essentiellement de sécurité, il est en effet indispensable de maximiser les capacités du câble à retarder la propagation des flammes d'une part, et à résister au feu d'autre part. Un ralentissement significatif de la progression des flammes, c'est autant de temps gagné pour évacuer les lieux et/ou pour mettre en oeuvre des moyens d'extinction appropriés. Une meilleure résistance au feu offre au câble la possibilité de fonctionner plus longtemps, sa dégradation étant moins rapide.

Qu'il soit électrique ou optique, destiné au transport d'énergie ou à la transmission de données, un câble est schématiquement constitué d'au moins un élément conducteur s'étendant à l'intérieur d'au moins un élément isolant. Il est à noter qu'au moins un des éléments isolants peut également jouer le rôle de moyen de protection et/ou que le câble peut comporter en outre au moins un élément de protection spécifique, formant une gaine. Or il est connu que parmi les meilleurs matériaux isolants et/ou de protection utilisés dans la câblerie, nombre d'entre eux sont malheureusement aussi d'excellentes matières inflammables. C'est notamment le cas des polyoléfines et de leurs copolymères, comme par exemple le polyéthylène, le polypropylène, les copolymères d'éthylène et d'acétate de vinyle, les copolymères d'éthylène et de propylène. Quoi qu'il en soit, dans la pratique, cette inflammabilité excessive s'avère totalement incompatible avec les impératifs de tenue au feu précédemment évoqués.

Dans le domaine de la câblerie, il existe de nombreuses méthodes pour améliorer le comportement au feu des polymères employés comme matériaux d'isolation et/ou de gainage.

La solution la plus répandue jusqu'à maintenant a consisté à employer des composés halogénés, sous forme d'un sous-produit halogéné dispersé dans une matrice polymère, ou directement sous forme d'un polymère halogéné comme dans le cas d'un PVC par exemple. Cependant, les réglementations actuelles tendent désormais à interdire l'utilisation de ce type de substances en raison essentiellement de leur toxicité et de leur corrosivité potentielles, que ce soit au moment de la fabrication du matériau, ou lors de sa décomposition par le feu. Ceci est d'autant plus vrai que la décomposition en question peut intervenir accidentellement lors d'un incendie, mais également volontairement au cours d'une incinération. Quoi qu'il en soit, le recyclage des matériaux halogénés demeure toujours particulièrement problématique.

C'est pourquoi on a de plus en plus recours à des charges ignifugeantes non halogénées; et notamment aux hydroxydes métalliques tels que l'hydroxyde d'aluminium ou l'hydroxyde de magnésium. Ce type de solutions techniques présente toutefois l'inconvénient de nécessiter de grandes quantités de charges pour atteindre un niveau d'efficacité satisfaisant, que ce soit en terme de capacité à retarder la propagation des flammes, que de résistance au feu. A titre d'exemple, la teneur en hydroxydes métalliques peut atteindre typiquement 150 à 200% par rapport à la quantité totale de résine. Or toute incorporation massive de charges induit une augmentation considérable de la viscosité de la matière, et par conséquent une diminution notable de la vitesse d'extrusion, d'où une baisse de productivité importante. L'addition de trop grandes quantités d'additifs retardateurs de feu est également à l'origine d'une détérioration significative des propriétés mécaniques et électriques du câble.

D'autres compositions ignifugeantes de l'art antérieur sont également décrites dans les documents US-A-4 419 469, JP 60 197762, EP-A-0 339 843, US-A-5 437 923 et US-A-4 000 140.

Aussi, le problème technique à résoudre par l'objet de la présente invention, est de proposer un câble d'énergie et/ou de télécommunication qui permettrait d'éviter les problèmes de l'état de la technique en offrant notamment des propriétés mécaniques sensiblement améliorées, tout en présentant une bonne tenue au feu.

La solution au problème technique posé consiste, selon la présente invention, en ce que le câble comporte au moins un élément constitutif à base d'un matériau résistant au feu dont la composition comprend un polymère synthétique et une charge ignifugeante, ladite charge ignifugeante comportant un composé inorganique associé à un composé hydrocarboné choisi parmi le groupe des asphaltènes, des maltènes, ou un quelconque mélange de ces composants, chaque élément constitutif étant choisi parmi un revêtement isolant et une gaine de protection.

On précise que les asphaltènes sont des composés aromatiques et/ou aliphatiques qui peuvent être indifféremment saturés ou insaturés. Ils constituent la fraction des bitumes qui sont insolubles dans l'hexane ou l'heptane. Ils se caractérisent également par le fait que leurs poids moléculaires sont relativement élevés puisque compris entre 1000 à 100000.

Les maltènes sont également des composés aromatiques et/ou aliphatiques qui peuvent être indifféremment saturés ou insaturés. Ils se distinguent cependant des asphaltènes par le fait qu'ils présentent de plus bas poids moléculaires, et qu'ils sont quant à eux généralement solubles dans l'hexane ou l'heptane.

Quoi qu'il en soit, l'invention telle qu'ainsi définie présente l'avantage d'offrir un très bon compromis entre résistance au feu et propriétés mécaniques. La présence du composé inorganique au sein de la charge ignifugeante permet classiquement d'accroître la résistance au feu du matériau. Pour compenser le fait que cette présence a également pour inconvénient de détériorer fortement les propriétés mécaniques du matériau correspondant, on lui associe simplement un composé à base de maltène et/ou d'asphaltène. L'ajout d'un tel composé hydrocarboné a en effet pour conséquences avantageuses de ne pas dégrader les performances en terme de résistance au feu, mais surtout d'améliorer fortement les propriétés mécaniques du matériau final.

Un autre avantage de l'invention réside dans le coût extrêmement bas d'une telle charge ignifugeante, surtout comparé au prix de revient des charges conventionnelles de l'état de la technique. Ceci constitue un intérêt économique indéniable dans le domaine de la câblerie, puisqu'il est susceptible de favoriser la diffusion commerciale des câbles ignifugés.

Selon une particularité de l'invention, le composé inorganique est choisi parmi le carbonate de calcium, l'oxyde de calcium, la silice, l'alumine, ou un quelconque mélange de ces composants. Il est entendu toutefois que le carbonate de calcium constitue pour l'heure le composé inorganique privilégié en raison de son excellent rapport prix/performances.

De manière particulièrement avantageuse, le ratio massique au sein de la charge ignifugeante, entre le composé inorganique et le composé hydrocarboné, est compris entre 0.05 et 0.95, et de préférence entre 0.7 et 0.95

Conformément à un mode de réalisation actuellement préféré de l'invention, la charge ignifugeante est de l'asphalte naturel de roche. Il s'agit d'une roche essentiellement calcaire, qui est naturellement imprégnée de bitume. Elle présente donc l'avantage de comporter naturellement un composé inorganique et un composé hydrocarboné conformes à l'invention. On précise simplement que sa teneur en carbonate de calcium est généralement supérieure à 80%, celle en bitume supérieure à 6%.

Conformément à une autre caractéristique avantageuse de l'invention, la composition comporte entre 5 et 200 parties en poids de charge ignifugeante pour 100 parties en poids de polymère synthétique, et de préférence entre 30 et 100 parties en poids de charge ignifugeante.

Selon une autre particularité de l'invention, le polymère synthétique est choisi parmi un polyéthylène, un polypropylène, un copolymère d'éthylène et de propylène (EPR), un terpolymère-éthylène-propylène-diène (EPDM), un copolymère d'éthylène et d'acétate de vinyle (EVA), un copolymère d'éthylène et d'acrylate de méthyle (EMA), un copolymère d'éthylène et d'acrylate d'éthyle (EEA), un copolymère d'éthylène et d'acrylate de butyle (EBA), un copolymère d'éthylène et d'octène, un polymère à base d'éthylène, un polymère à base de polypropylène, un polyétherimide, un polyuréthane thermoplastique, un polyester, un polyamide, ou un quelconque mélange de ces composants.

Conformément à une autre particularité de l'invention, la composition est en outre dotée d'au moins un agent ignifugeant secondaire.

De manière particulièrement avantageuse, chaque agent ignifugeant secondaire est choisi parmi les composés contenant du phosphore tels que les phosphates organiques ou inorganiques, les composés contenant de l'antimoine tels que l'oxyde d'antimoine, les hydroxydes métalliques tels que l'hydroxyde d'aluminium et l'hydroxyde de magnésium, les composés à base de bore tels que les borates, les carbonates des métaux alcalins des groupes IA et IIA comme les carbonates de calcium , sodium, potassium ou magnésium et les hydroxycarbonates correspondants , les composés à base d'étain tels que stannate et hydroxystannates, La mélamine et ses dérivés tels que les mélamines phosphates, les résines formophénoliques.

Selon une autre particularité de l'invention, la composition est en outre pourvue d'au moins un additif choisi parmi le groupe des pigments, des antioxydants, des stabilisants ultraviolets, ainsi que des aides à la mise en oeuvre, comme par exemple des lubrifiants, des plastifiants et des stabilisants thermiques.

L'invention concerne ainsi tout câble comportant au moins un élément conducteur s'étendant à l'intérieur d'au moins un revêtement isolant, et dont au moins un revêtement isolant est réalisé à partir d'une composition de matériau résistant au feu telle que précédemment décrite.

L'invention est par ailleurs relative à tout câble doté d'au moins un élément conducteur s'étendant à l'intérieur d'au moins un revêtement isolant, et comportant en outre au moins une gaine de protection réalisée à partir d'une composition de matériau résistant au feu telle que précédemment décrite.

Il est à noter que la locution "élément conducteur" désigne aussi bien un conducteur électrique qu'un conducteur optique. Par ailleurs, dans tous les cas de figure, il peut s'agir indifféremment d'un câble électrique ou optique, notamment destiné au transport d'énergie et/ou à la transmission de données.

D'autres caractéristiques et avantages de la présente invention apparaîtront au cours de la description qui va suivre, l'exemple étant donné à titre illustratif et nullement limitatif.

### Exemple comparatif

Quatre échantillons de matériaux sont préparés à partir de compositions différentes, en vue de pouvoir comparer leurs performances respectives en terme de tenue au feu et de propriétés mécaniques. On précise que les compositions en question sont toutes à même d'être utilisées pour réaliser des matériaux isolants et/ou de gainage et/ou de bourrage pour des câbles d'énergie et/ou de télécommunication.

Quoi qu'il en soit, le polymère synthétique est commun au quatre échantillons. Il s'agit en l'occurrence d'un copolymère d'éthylène et d'acétate de vinyle (EVA). Seule la nature de la charge ignifugeante varie d'un échantillon à l'autre. Le tableau 1 détaille ces différences.

**Tableau 1**

| Ech. | polymère synthétique | charge ignifugeante | Teneur en composé inorganique | Teneur en composé hydrocarboné |
|---|---|---|---|---|
| 1 | EVA | Asphalte naturel de roche | environ 80% de CaCO₃ | environ 20% asphaltènes et maltènes |
| 2 | EVA | Gilsonite | 0% | 100% asphaltènes et maltènes |
| 3 | EVA | Carbonate de calcium | 100% | 0% |
| 4 | EVA | - | 0% | 0% |

On remarque tout d'abord que l'échantillon 1 est issu d'une composition conforme à l'invention, puisque sa charge ignifugeante est constituée d'un composé inorganique sous forme de carbonate de calcium CaCO₃, et d'un composé hydrocarboné à base d'un mélange d'asphaltènes et de maltènes.

On observe ensuite que l'échantillon 2 est caractérisé par le fait que sa charge ignifugeante est uniquement formée d'un composé organique de type asphaltène/maltène.

On note par ailleurs que l'échantillon 3 est remarquable en ce que sa charge ignifugeante est dépourvue de tout composé hydrocarboné à base d'un mélange d'asphaltènes et de maltènes, c'est-à-dire qu'elle est 100% minérale.

L'échantillon 4 constitue quant à lui la référence de cet exemple comparatif, en ce sens que seul le polymère synthétique intervient dans sa composition. En d'autres termes, il est dépourvu de toute charge ignifugeante.

### Mode opératoire

Les compositions 1 à 3 sont préparées en mélangeant 100pcr (pour cent de résine) de chaque charge ignifugeante avec une quantité toujours identique de polymère synthétique, ceci bien entendu afin de ne pas fausser les analyses comparatives ultérieures.

Quelle que soit la nature précise de la composition préparée, les étapes de mélange de la matrice polymère avec la charge ignifugeante sont toujours les mêmes:
- Consigne de température fixée à 160°C pendant toute la durée du mélange,
- introduction du polymère synthétique dans le mélangeur interne réglé à 30 tours par minute (tr/min),
- fusion du polymère synthétique à 160°C pendant 2 minutes à 30 tr/min,
- fusion à 60 tr/min pendant 2 minutes,
- introduction de la charge ignifugeante à 30 tr/mn,
- mélange à 30 tr/min pendant environ 10 minutes.

### Préparation des échantillons

L'échantillon 1 est préparé concrètement en mélangeant 146.7g de copolymère d'éthylène et d'acétate de vinyle (EVA) contenant 28% d'acétate de vinyle, produit commercialisé sous la marque Evatane 28-03 par la société Atofina, avec 73.3g d'asphalte naturel de roche contenant environ 80% de composé inorganique broyé et tamisé sur un tamis de 90 microns. Cette opération s'effectue bien entendu conformément au mode opératoire précédemment décrit.

Il en est de même pour la préparation de l'échantillon 2, avec dans ce cas précis un mélange réalisé à partir de 146.7g de copolymère d'éthylène et d'acétate de vinyle (EVA) contenant 28% d'acétate de vinyle, et de 73.3g d'asphalte naturel Gilsonite, distribuée sous la dénomination Black brillant par la société Ziegler Corp.

L'échantillon 3 provient quant à lui du mélange de 146.7g de copolymère d'éthylène et d'acétate de vinyle (EVA) contenant 28% d'acétate de vinyle, avec 73.3g de carbonate de calcium broyé et tamisé sur un tamis de 90µm, toujours en suivant la procédure précédemment décrite.

Les trois échantillons de matériaux composites ainsi préparés, ainsi que l'échantillon 4 de référence, sont alors prêts à subir les tests de caractérisation prévus sous réserve de subir préalablement des mises en forme adéquates.

### Tenue au feu

Des analyses par cône-calorimètre sont conduites afin d'évaluer le comportement au feu des échantillons 1 à 4.

Les matériaux correspondants doivent pour cela être façonnés en plaques carrées de 10cm de côté et de 3mm d'épaisseur. Cette opération est réalisée en utilisant une presse hydraulique chauffante, conformément à la procédure suivante:
- Fusion à 150°C pendant 3 minutes,
- mise sous pression à 150 bar pendant 2 minutes, toujours à 150°C,
- refroidissement à l'eau sous 150 bar pendant 5 minutes.

Les échantillons 1 à 4 ainsi conformés peuvent alors être testés au moyen d'un calorimètre à cône conformément à la norme ISO 5660-1 relative au débits calorifiques des produits du bâtiment.

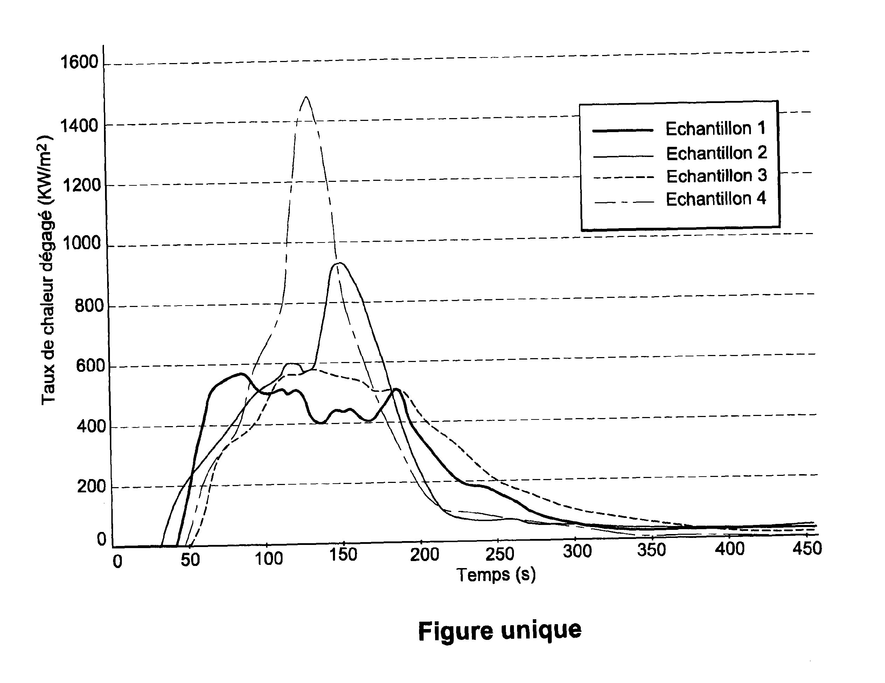

Concrètement, on mesure au cours du temps le taux de chaleur dégagée lors de la combustion de chaque échantillon. La figure unique illustre d'ailleurs les comportements des différents matériaux.

Le tableau 2 résume quant lui les principales caractéristiques des échantillons 1 à 4 en terme de tenue au feu, à savoir la chaleur totale dégagée et le taux maximum de chaleur dégagée.

**Tableau 2**

| Echantillons | Chaleur totale dégagée (MJ/m²) | Taux maximum de chaleur dégagée (kW/m²) |
|---|---|---|
| 1 | 84 | 558 |
| 2 | 99 | 955 |
| 3 | 92 | 560 |
| 4 | 103 | 1478 |

On note tout d'abord que l'échantillon 2 présente des propriétés au feu très médiocres. Son taux maximum de chaleur dégagée, critère déterminant dans la résistance au feu des matériaux, n'est en effet inférieur que de 35% à celui de l'échantillon 4 de référence. L'efficacité d'une charge ignifugeante dépourvue de tout composé inorganique et constituée uniquement d'un mélange à base d'asphaltènes et de maltènes, s'avère par conséquent insuffisante en terme de résistance au feu.

On observe à contrario que l'échantillon 3 dispose d'un bon comportement dans des conditions thermiques extrêmes. Son taux maximum de chaleur dégagée est fortement réduit par rapport à celui de l'échantillon 4 de référence, en l'occurrence de l'ordre de 62%. Une charge ignifugeante à base exclusivement de composé inorganique, et donc dépourvue de tout mélange de type asphaltènes/maltènes, confère donc une tenue au feu tout à fait adéquate.

Mais on remarque surtout que l'échantillon 1 présente des performances au feu encore plus avantageuses. En effet, comme pour l'échantillon 3, son taux maximum de chaleur dégagée est réduit de près de 62% par rapport à celui de l'échantillon 4 de référence. De plus, la chaleur totale dégagée lors de la combustion de l'échantillon 1 est inférieure à celles des autres, et notamment celles des matériaux composites des échantillon 2 et 3. Ces caractéristiques mettent en évidence l'effet particulièrement avantageux de l'association d'un composé inorganique avec un composé contenant des dérivés de la famille des asphaltènes et/ou des maltènes, pour constituer une charge ignifugeante efficace.

### Propriétés mécaniques

Des essais sont menés à température ambiante, dans le but cette fois de déterminer les principales propriétés mécaniques des échantillon 1 à 4, à savoir l'allongement à la rupture et la contrainte à la rupture.

Les différentes mesures sont réalisées au moyen d'une machine de traction de type ZWICK 1010, avec des éprouvettes de type H2 découpées dans des plaques de matériaux d'environ 1mm d'épaisseur, lesquelles sont préparées selon le même mode opératoire que pour les tests au feu précédemment décrits.

Chaque éprouvette est fixée entre un mord fixe et un mord mobile qui se déplace à 200mm/min pendant l'essai. On mesure en continu la force nécessaire au déplacement, et des extensomètres fixés sur la partie utile de l'éprouvette permettent de connaître l'allongement correspondant.

Pour la caractérisation de chaque matériau d'échantillon, l'allongement à la rupture ainsi que la résistance à la rupture ont été mesurés. Cette méthode de caractérisation répond à la norme CEI 811-1. Le tableau 3 regroupe les résultats des différentes mesures en question.

**Tableau 3**

| Echantillons | Allongement à la rupture (%) | Contrainte à la rupture (MPa) |
|---|---|---|
| 1 | 686 ± 20 | 17 |
| 2 | 674 ± 42 | 10 |
| 3 | 406 ± 12 | 12 |
| 4 | 647 ± 30 | 30 |

On note tout d'abord que l'allongement à la rupture de l'échantillon 2 reste très élevé, alors que la résistance à la rupture chute assez fortement par rapport aux caractéristiques de l'échantillon 4 de référence. Une charge ignifugeante dépourvue de tout composé inorganique et constituée uniquement d'un mélange à base d'asphaltènes et de maltènes, altère donc en partie les propriétés mécaniques du matériau polymère dans lequel elle est dispersée.

On remarque ensuite que pour l'échantillon 3, l'allongement à la rupture ainsi que la résistance à la rupture du matériau sont fortement affectés par l'ajout d'une charge ignifugeante à base exclusivement de composé inorganique, et donc dépourvue de tout mélange de type asphaltènes/maltènes.

On observe enfin dans le cas de l'échantillon 1, que l'allongement à la rupture n'est pas détérioré par rapport à celui de l'échantillon 4 de référence, et que la résistance à la rupture est bien supérieure à celles des autres matériaux composites des échantillon 2 et 3. Une charge ignifugeante, associant un composé inorganique et un composé à base d'asphaltènes et de maltènes, permet par conséquent de conserver des propriétés mécaniques de très bon niveau.

En conclusion, seule une charge ignifugeante conforme à l'invention est en mesure de conférer à un matériau polymère dans lequel elle est dispersée, à la fois une bonne tenue au feu, et des propriétés mécaniques de haut niveau.

## Revendications

1. Câble d'énergie et/ou de télécommunication, **caractérisé en ce qu'**il comporte au moins un élément constitutif à base d'un matériau résistant au feu dont la composition comprend un polymère synthétique et une charge ignifugeante, ladite charge ignifugeante comportant un composé inorganique associé à un composé hydrocarboné choisi parmi le groupe des asphaltènes, des maltènes, ou un quelconque mélange de ces composants, chaque élément constitutif étant choisi parmi un revêtement isolant et une gaine de protection.

2. Câble selon la revendication 1, **caractérisé en ce que** le composé inorganique est choisi parmi le carbonate de calcium, l'oxyde de calcium, la silice, l'alumine, ou un quelconque mélange de ces composants.

3. Câble selon l'une des revendications 1 ou 2, **caractérisé en ce que** le ratio massique entre le composé inorganique et le composé hydrocarboné est compris entre 0.05 et 0.95, et de préférence entre 0.7 et 0.95.

4. Câble selon l'une quelconque des revendications 1 à 3, **caractérisé en ce que** la charge ignifugeante est de l'asphalte naturel de roche.

5. Câble selon l'une quelconque des revendications 1 à 4, **caractérisé en ce que** la composition comporte entre 5 et 200 parties en poids de charge ignifugeante pour 100 parties en poids de polymère synthétique, et de préférence entre 30 et 100 parties en poids de charge ignifugeante.

6. Câble selon l'une quelconque des revendications 1 à 5, **caractérisé en ce que** le polymère synthétique est choisi parmi un polyéthylène, un polypropylène, un copolymère d'éthylène et de propylène (EPR), un terpolymère-éthylène-propylène-diène (EPDM), un copolymère d'éthylène et d'acétate de vinyle (EVA), un copolymère d'éthylène et d'acrylate de méthyle (EMA), un copolymère d'éthylène et d'acrylate d'éthyle (EEA), un copolymère d'éthylène et d'acrylate de butyle (EBA), un copolymère d'éthylène et d'octène, un polymère à base d'éthylène, un polymère à base de polypropylène, un polyétherimide, un polyuréthane thermoplastique, un polyester, un polyamide, ou un quelconque mélange de ces composants.

7. Câble selon l'une quelconque des revendications 1 à 6, **caractérisé en ce que** la composition comporte en outre au moins un agent ignifugeant secondaire.

8. Câble selon la revendication 7, **caractérisé en ce que** chaque agent ignifugeant secondaire est choisi parmi les composés contenant du phosphore tels que les phosphates organiques ou inorganiques, les composés contenant de l'antimoine tels que l'oxyde d'antimoine, les hydroxydes métalliques tels que l'hydroxyde d'aluminium et l'hydroxyde de magnésium, les composés à base de bore tels que les borates, les carbonates des métaux alcalins des groupes IA et IIA comme les carbonates de calcium , sodium, potassium ou magnésium et les hydroxycarbonates correspondants , les composés à base d'étain tels que stannate et hydroxystannates, La mélamine et ses dérivés tels que les mélamines phosphates, les résines formophénoliques.

9. Câble selon l'une quelconque des revendications 1 à 8, **caractérisé en ce que** la composition comporte en outre au moins un additif choisi parmi le groupe des lubrifiants, des plastifiants, des stabilisants thermiques, des pigments, des antioxydants, et des stabilisants ultraviolets.

## Claims

1. A power and/or telecommunications cable, **characterized in that** it includes at least a constitutive element based on a fire-resistant material, the composition of which comprises a synthetic polymer and a flame-retarding filler, said flame-retarding filler including an inorganic compound associated with a hydrocarbon compound selected from the group of asphaltenes, maltenes, or any mixture of these components, each constitutive element being selected from an insulating cladding and a protective sheath.

2. The cable according to claim 1, **characterized in that** the inorganic compound is selected from calcium carbonate, calcium oxide, silica, alumina, or any mixture of these components.

3. The cable according to any of claims 1 or 2, **characterized in that** the mass ratio between the inorganic compound and the hydrocarbon compound is comprised between 0.05 and 0.95, and preferably between 0.7 and 0.95.

4. The cable according to any of claims 1 to 3, **characterized in that** the flame-retarding filler is natural rock asphalt.

5. The cable according to any of claims 1 to 4, **characterized in that** the composition includes between 5 and 200 parts by weight of flame-retarding filler per 100 parts by weight of synthetic polymer, and preferably between 30 and 100 parts by weight of flame-retarding filler.

6. The cable according to any of claims 1 to 5, **characterized in that** the synthetic polymer is selected from polyethylene, polypropylene, ethylene and propylene copolymer (EPR), ethylene-propylene-diene terpolymer (EPDM), ethylene and vinylacetate (EVA) copolymer, ethylene and methyl acrylate (EMA) copolymer, ethylene and ethyl acrylate (EEA) copolymer, ethylene and butyl acrylate (EBA) copolymer, ethylene and octene polymer, ethylene-based polymer, polypropylene-based polymer, polyetherimide, thermoplastic polyurethane, polyester, polyamide, or any mixture of these components.

7. The cable according to any of claims 1 to 6, **characterized in that** the composition further includes at least one secondary flame-retarder.

8. The cable according to claim 7, **characterized in that** each secondary flame-retarder is selected from compounds containing phosphorus, such as organic or inorganic phosphates, compounds containing antimony such as antimony oxide, metal hydroxides, such as aluminium hydroxide and magnesium hydroxide, boron-based compounds such as borates, carbonates of alkaline metals from the Groups IA and IIA such as calcium, sodium, potassium or magnesium carbonates, and the corresponding hydroxycarbonates, tin-based compounds such as stannates and hydroxystannates, melamine and its derivatives such as phosphate melamines, formophenolic resins.

9. The cable according to any of claims 1 to 8, **characterized in that** the composition further includes at least one additive selected from the group of lubricants, plasticizers, thermal stabilizers, pigments, antioxidants, and ultraviolet stabilizers.

## Patentansprüche

1. Energie- und/oder Telekommunikationskabel, **dadurch gekennzeichnet, dass** es mindestens einen wesentlichen Bestandteil auf Basis eines feuerfesten Materials umfasst, dessen Zusammensetzung ein synthetisches Polymer und einen flammhemmenden Füllstoff enthält, wobei der flammhemmende Füllstoff eine anorganische Verbindung in Kombination mit einer Kohlenwasserstoffverbindung umfasst, die aus der Gruppe der Asphaltene, der Maltene oder eines beliebigen Gemisches dieser Bestandteile ausgewählt ist, wobei jeder wesentliche Bestandteil aus einer isolierenden Beschichtung und einer Schutzhülle ausgewählt ist.

2. Kabel nach Anspruch 1, **dadurch gekennzeichnet, dass** die anorganische Verbindung aus Calciumcarbonat, Calciumoxid, Siliciumdioxid, Aluminiumoxid oder einem beliebigen Gemisch dieser Bestandteile ausgewählt ist.

3. Kabel nach einem der Ansprüche 1 oder 2, **dadurch gekennzeichnet, dass** das Massenverhältnis zwischen der anorganischen Verbindung und der Kohlenwasserstoffverbindung zwischen 0,05 und 0,95 und vorzugsweise zwischen 0,7 und 0,95 liegt.

4. Kabel nach einem der Ansprüche 1 bis 3, **dadurch gekennzeichnet, dass** der flammhemmende Füllstoff Naturasphalt ist.

5. Kabel nach einem der Ansprüche 1 bis 4, **dadurch gekennzeichnet, dass** die Zusammensetzung zwischen 5 und 200 Gewichtsteile flammhemmenden Füllstoffes pro 100 Gewichtsteile synthetischen Polymers und vorzugsweise zwischen 30 und 100 Gewichtsteile flammhemmenden Füllstoffes enthält.

6. Kabel nach einem der Ansprüche 1 bis 5, **dadurch gekennzeichnet, dass** das synthetische Polymer ausgewählt ist unter einem Polyethylen, einem Polypropylen, einem Propylen-Ethylen-Copolymer (EPR), einem Ethylen-Propylen-Dien-Terpolymer (EPDM), einem EthylenVinylacetat-Copolymer (EVA), einem Ethylen-Methylacrylat-Copolymer (EMA), einem Ethylen-Ethylacrylat-Copolymer (EEA), einem Ethylen-Butylacrylat-Copolymer (EBA), einem Ethylen-Octan-Copolymer, einem Polymer auf der Basis von Ethylen, einem Polymer auf Polypropylenbasis, einem Polyetherimid, einem thermoplastischen Polyurethan, einem Polyester, einem Polyamid, oder einem beliebigen Gemisch dieser Bestandteile.

7. Kabel nach einem der Ansprüche 1 bis 6, **dadurch gekennzeichnet, dass** die Zusammensetzung außerdem mindestens ein sekundäres Flammschutzmittel enthält.

8. Kabel nach Anspruch 7, **dadurch gekennzeichnet, dass** jedes sekundäre Flammschutzmittel ausgewählt ist unter phosphorhaltigen Verbindungen wie organischen oder anorganischen Phosphaten, antimonhaltigen Verbindungen wie Antimonoxid, Metallhydroxiden wie Aluminiumhydroxid und Magnesiumhydroxid, Verbindungen auf der Basis von Bor wie Boraten, Carbonaten der Alkalimetalle der Gruppen IA und IIA, wie Calcium-, Natrium-, Kalium- oder Magnesiumcarbonaten und der entsprechenden Hydrogencarbonate, der Verbindungen auf der Basis von Zinn, wie Stannat und Hydroxystannaten, Melamin und dessen Derivaten wie Melaminphosphaten und Phenol-Formaldehydharzen.

9. Kabel nach einem der Ansprüche 1 bis 8, **dadurch gekennzeichnet, dass** die Zusammensetzung außerdem mindestens einen aus der Gruppe der Schmierstoffe, der Weichmacher, der Wärmestabilisatoren, der Pigmente, der Antioxidantien und der Ultraviolett-Stabilisatoren ausgewählten Zusatzstoff enthält.
